# EUROPÄISCHE PATENTSCHRIFT

(11) **EP 0 296 411 B1**
(45) Veröffentlichungstag und Bekanntmachung des Hinweises auf die Patenterteilung: **07.09.1994**
(21) Anmeldenummer: 88109165.6
(22) Anmeldetag: 09.06.1988
(51) Int. Cl.: C09B 19/02, C07D 498/02

(54) **Verfahren zur Herstellung von Triphendioxazinverbindungen**
Process for the manufacture of triphen dioxazines
Procédé de fabrication de composés de triphendioxazines

(30) Priorität: 20.06.1987 DE 3720477
(43) Veröffentlichungstag der Anmeldung: 28.12.1988
(73) Patentinhaber: BAYER AG, 51368 Leverkusen (DE)
(72) Erfinder: Stawitz, Josef-Walter, Dr., D-5068 Odenthal (DE); Harms, Wolfgang, Dr., D-5090 Leverkusen (DE)

(56) Entgegenhaltungen:
- EP-A- 0 141 359
- EP-A- 0 148 390
- EP-A- 0 158 882
- EP-A- 0 184 712

## Beschreibung

Die vorliegende Erfindung betrifft ein neues Verfahren zur Herstellung von Triphendioxazinverbindungen durch oxidative Cyclisierung von 2,5-Diarylaminobenzochinonen in Schwefelsäure oder Schwefeltrioxid enthaltender Schwefelsäure, dadurch gekennzeichnet, daß als Oxidationsmittel Chlor, Brom, Natriumbromat oder Kaliumbromat verwendet wird.

Aus EP-A-141 359 ist bereits ein Verfahren zur Herstellung von Triphendioxazinverbindungen beschrieben, die durch Cyclisierung der entsprechenden Benzochinonvorprodukte in Oleum mit iodhaltigen Verbindungen als Katalysatoren erhalten werden.

Pro Mol 2,5-Diarylaminobenzochinon werden dabei etwa 0,5 bis 10, bevorzugt 0,5 bis 3 Mol Chlor, Brom, Natriumbromat oder Kaliumbromat eingesetzt.

Die Cyclisierung wird im allgemeinen bei 0 bis 60°C, vorzugsweise bei 10 bis 30°C durchgeführt.

Als Reaktionsmedium wird bevorzugt konzentrierte Schwefelsäure, Monohydrat oder Oleum, das bis zu 50 % Schwefeltrioxid enthält, verwendet. Die Auswahl des geeigneten Reaktionsmediums richtet sich im wesentlichen nach dem Diarylaminobenzochinon und dem Cyclisierungsmittel. Bei Einsatz relativ leicht sulfierbarer 2,5-Diarylaminobenzochinone wird konzentrierte Schwefelsäure bis ca. 5 %iges Oleum bevorzugt. In den anderen Fällen wird wegen der dabei erzielbaren kurzen Reaktionszeiten 10 bis 50 %iges Oleum, ganz besonders 10 bis 30 %iges Oleum bevorzugt.

Als Beispiele für erfindungsgemäß als Ausgangsverbindungen einsetzbare 2,5-Diarylaminobenzochinonverbindungen seien Verbindungen der allgemeinen Formel 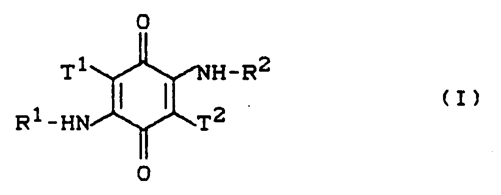
erwähnt, worin
- T¹, T² =: unabhängig voneinander H, Cl, Br, C₁-C₄-Alkoxy, C₁-C₄-Alkyl, gegebenenfalls substituierter Phenyl- oder Phenoxyrest,
- R¹, R² =: unabhängig voneinander gegebenenfalls substituierter Phenyl-, Naphthyl-, Carbazolyl-, Fluorenyl-, Chrysenyl- oder Pyrenylrest.

Geeignete Substituenten für die gegebenenfalls substituierten Phenyl- oder Phenoxyreste T¹ und T² sind z.B. Cl, CH₃, C₂H₅, OCH₃, OC₂H₅ und NO₂.

Geeignete Substituenten für R¹ und R² sind beispielsweise folgende:

Alkyl, wie Methyl, Ethyl, n-Propyl, n-Butyl, Cyclohexyl, Alkoxy, wie Methoxy, Ethoxy, Isopropoxy, Cyclohexyloxy, Fluor, Chlor, Brom, Carboxy, Sulfo, Sulfamoyl, Acylamino, wie Acetylamino, Propionylamino, Ureido, Benzoylamino, Amino, Alkylamino, wie Methylamino, Ethylamino, β-Aminoethylamino, γ-Aminopropylamino, γ-Dimethylaminopropylamino, Aryloxy, wie Phenoxy, Arylamino, wie Anilino, Benzylamino, Cyclohexylamino, Arylthio, Phenyl, Benzyl, Phenylureido, β-Hydroxyethylsulfonyl, β-Hydroxyethylamino, γ-Hydroxypropylamino, β-Sulfatoethylamino, γ-Sulfatopropylamino, Bis-β-sulfatoethylamino, Bis-β-sulfoethylamino, β-Hydroxyethoxy, β-Hydroxypropoxy, β-Hydroxyethylthio, γ-Hydroxypropylthio, β-Sulfoethoxy, β-Sulfatoethoxy, β-(β′-Hydroxyethoxy)-ethoxy, (β-Hydroxyethyl)-amino, β-Hydroxypropylamino, β-Sulfoethylamino, γ-Sulfopropylamino, β-(4-Sulfophenyl)-ethylamino, β-(2,4-Disulfophenyl)-ethylamino, β-(2-Sulfo-4-β-hydroxyethylsulfonyl)-ethylamino, Bis-(β-hydroxyethyl)-amino, N-methyl-N-(β-hydroxyethyl)-amino, N-Ethyl-N-(β-hydroxyethyl)-amino, N-Methyl-(β-sulfoethyl)-amino oder N-Ethyl-N(β-sulfoethyl)-amino.

Die hier aufgeführten Alkyl-, Benzyl- und Phenylreste können selbst noch weiter substituiert sein, z.B. durch NH₂, NHCH₃, OCH₃, OC₂H₅, SO₃H, COOH, NHCOCH₃, Cl, Br, NHSONH₂, OH, SCH₃, SO₂NH₂, CONH₂⁺N(CH₃)₃, SO₂CH₂CH₂OSO₃H.

Aus der Fülle der in Frage kommenden Reste R₁ und R₂ seien folgende beispielhaft erwähnt:
4-Amino-3-sulfophenyl,
3-Amino-4-sulfophenyl,
4-(4′-Amino-3′-sulfoanilino)-3-sulfophenyl,
4-(3′-Amino-4′-sulfoanilino)-3-sulfophenyl,
4-(2′-Aminoethylamino)-3-sulfophenyl,
4-(3′-Aminopropylamino)-3-sulfophenyl,
4-(4′-Aminocyclohexylamino)-3-sulfophenyl,
4-Ethylamino-3-sulfophenyl,
4-β-Hydroxyethylamino-3-sulfophenyl,
4-β-Methoxyethylamino-3-sulfophenyl,
6-Amino-1,5-disulfo-3-naphthyl,
4-Benzylamino-3-sulfophenyl,
4-Phenoxy-3-sulfophenyl,
4-(β-Aminoethylamino)-3-(β-sulfoethylsulfamoyl)-phenyl,
4-(β-Sulfoethylamino)-3-(β-aminoethylsulfamoyl)-phenyl,
4-Ethoxy-3-(β-hydroxyethylsulfonyl)-phenyl,
4-Methoxy-3-(β-sulfatoethylsulfonyl)-phenyl,
4-(β-Hydroxyethylamino)-3-(β-hydroxyethylsulfonyl)-phenyl.

Die Herstellung der 2,5-Diarylaminobenzochinone aus Arylaminen und 1,4-Benzochinonen erfolgt nach Methoden, wie sie beispielsweise in K. Venkataraman "The Chemistry of Synthetic Dyes" Band V, S. 419-427 (1971), und in Ullmanns Encyclopädie der technischen Chemie, 4.Aufl. Band 8, S. 240 und 241 (1974) sowie der deutschen Offenlegungsschrift Nr. 28 23 828 beschrieben sind.

So werden z.B. die 2,5-Diarylaminobenzochinone der Formel (I) mit T¹ = T² = Cl aus 2,3,5,6-Tetrachlorbenzochinon und Arylamin in Wasser bei 30-50°C hergestellt, wobei der pH mit einer basischen Verbindung, z.B. Natriumcarbonat bei pH 5 bis 6 gehalten wird. Verbindungen der Formel (I) mit T¹ = T² = H lassen sich aus 2,5-Dihydroxybenzochinon und aromatischem Amin in Eisessig bei 20 bis 100°C herstellen.

2,5-Diarylaminobenzochinone, die β-Hydroxyethylsulfonyl- oder β-Hydroxyethylaminoreste tragen, werden vor bzw. bei der Cyclisierung sulfatiert.

Die Aufarbeitung der bei der Cyclisierungsreaktion erhaltenen Reaktionsprodukte erfolgt nach an sich bekannten Methoden.

Das erfindungsgemäße Verfahren ermöglicht Cyclisierung unter sehr schonenden Bedingungen. Es ist insbesondere auch möglich Verbindungen I mit T₁ = T₂ = H, die nach den bekannten Verfahren (Oxidationsmittel: Schwefeltrioxid, Alkaliperoxydisulfat, Natriumborat, Iod oder anorganische Iodverbindung) nicht oder nur schwer zu cyclisieren sind, in hohen Ausbeuten zu cyclisieren.

Gleichzeitig mit der Cyclierung wird under den Reaktionsbedingungen halogeniert, und man erhält die 6,13-Dichlor- bzw. Dibromtriphendioxazine (T₁ = T₂ = Cl, Br).

Durch weitere Halogenierung, insbesondere in Gegenwart von Katalysatoren (z.B. J₂), lassen sich höher halogenierte Triphendioxazine erhalten.

Die erfindungsgemäß erhältlichen Triphendioxazine sind bekannt.

Die sulfogruppenhaltigen Triphendioxazine können zum Färben von Wolle oder synthetischen Polyamiden verwendet werden, diejenigen, die noch zusätzlich Aminogruppen enthalten, nach Acylierung z.B. mit Di- oder Trihalogentriazinen oder Di-, Tri- oder Tetrahalogenpyrimidinen zum Färben von Baumwolle.

### Beispiel 1

58,5 Teile eines gemäß DE-A 3 439 756 aus 48 g 2,3,5,6-Tetrachlorbenzochinon und 102 g 4-β-Hydroxyethylamino-3-β-hydroxyethylsulfonyl-anilin in Wasser bei pH 5-6 hergestellten Kondensationsprodukts werden bei 20°C in 250 Teile 20 %iges Oleum eingetragen. Man läßt eine Stunde bei 20 bis 25°C nachrühren, gibt rasch 19 Teile Brom zu und rührt unter leichter Kühlung 2 Stunden bei 20 bis 25°C. Dann wird die Schmelze auf 800 g Eis ausgetragen, und das Produkt durch Zugabe von 200 g Kaliumchlorid gefällt. Man saugt ab, wäscht mit 25 %iger Kaliumchlorid-Lösung und trocknet den Nutschkuchen im Vakuum bei 60°C. Das salzhaltige Produkt enthält <0,1 % org. Brom und 5,4 % org. Chlor, und entspricht im wesentlichen der Formel

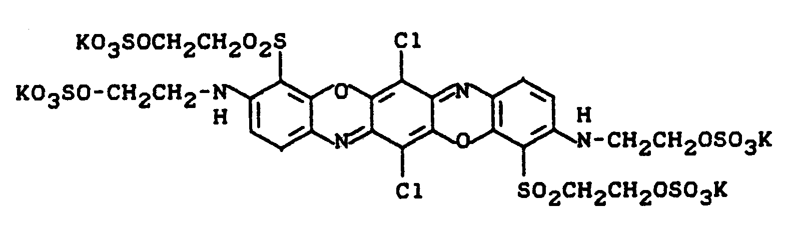

Es färbt auf Baumwolle ein kräftiges, etwas rotstichiges Blau.

### Beispiel 2

a) In 1 l Eisessig werden bei 70°C nacheinander 50,4 Teile 2,5-Dihydroxybenzochinon und 209 Teile 87 %iges 4-β-Hydroxyethylamino-3-β-hydroxyethylsulfonyl-anilin eingetragen. Man rührt 3 Stunden bei 70°C, kühlt auf 20-25°C, saugt ab und trocknet im Vakuum bei 50°C. Das Produkt entspricht im wesentlichen der Formel 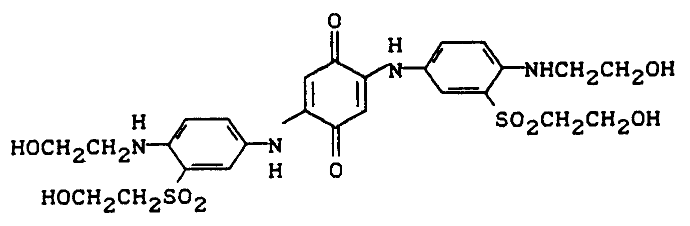
b) 56 Teile des nach a) hergestellten Zwischenprodukts werden in 250 Teile 20 %iges Oleum eingetragen. Die Schmelze wird 1 Stunde bei 25°C gerührt. Dann setzt man 30 Teile Brom in 2 Portionen zu und läßt 5 Stunden bei 25°C nachrühren. Die Schmelze wird auf 800 Teile Eis, dem etwas Natriumhydrogensulfit-Lösung zugesetzt sind, ausgetragen. Das Produkt wird durch Zugabe von 250 g Kaliumchlorid ausgesalzen, abgesaugt, mit 20 %iger Kaliumchlorid-Lösung gewaschen und getrocknet. Das salzhaltige Produkt enthält 9,0 % org. Brom und entspricht im wesentlichen der Formel

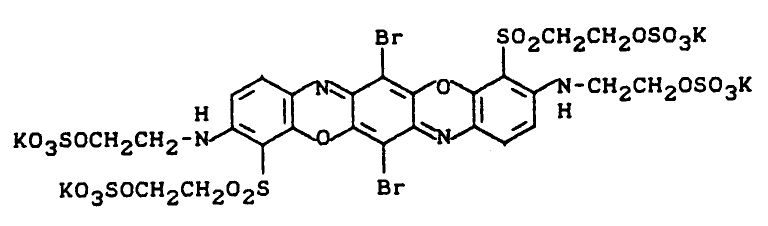

Es färbt Baumwolle in kräftigen etwas rotstichigen Blautönen.

### Beispiel 3

56 Teile des nach Beispiel 2a) hergestellten Kondensationsprodukts werden in 300 Teile 20 %iges Oleum eingetragen und 2 Stunden bei 15 bis 20°C verrührt. Dann leitet man bei 15 bis 20°C solange, normalerweise 3 bis 4 Stunden, Chlor ein, bis eine aufgearbeitete Probe die vollständige Cyclisierung zur Triphendioxoazinverbindung anzeigt. Man gießt die fertige Schmelze auf 1000 Teile Eis, salzt das Produkt durch Zugabe von 200 Teilen Kaliumchlorid aus, saugt ab, wäscht mit 20 %iger Kaliumchlorid-Lösung und trocknet im Vakuum bei 60°C. Das Produkt ist praktisch identisch mit dem nach Beispiel 1 hergestelltem Farbstoff.

### Beispiel 4

Verfährt man wie in Beispiel 3, setzt aber vor der Chlorierung 0,3 g Iod zu, so erhält man ein höher halogeniertes Triphendioxazin der folgenden Formel

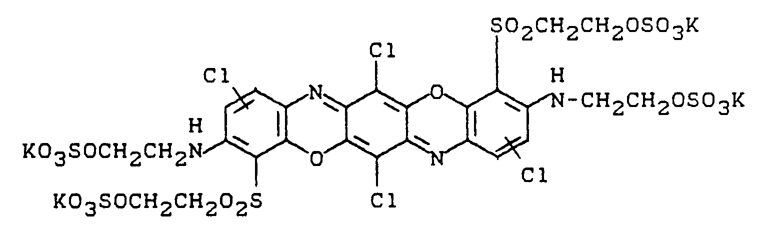

### Beispiel 5

45 Teile eines gemäß DE-A 3 530 830, Beispiel 1, durch Kondensation von 19 Teilen 1,4-Diaminobenzol-2-sulfonsäure und 26 Teilen 3-β-Hydroxyethylsulfonyl-4-β-hydroxyethylamino-anilin mit 26 Teilen 2,3,5,6-Tetrachlorbenzochinon erhaltenen Produktgemischs werden bei 20°C in 250 Teile 10 %iges Oleum eingetragen. Es wird 2 Stunden nachgerührt, dann rasch 28 g Brom zugegeben und unter leichtem Kühlen 2 Stunden gerührt. Nach Austragen auf Eis wird mit Calciumcarbonat auf pH ca. 1,5, dann mit Natriumcarbonat auf einen pH von 5,5 gestellt. Man saugt das Calciumsulfat ab und dampft das Filtrat ein. Das so isolierte salzhaltige Produktgemisch enthält als Hauptkomponente das Triphendioxazin folgender Formel

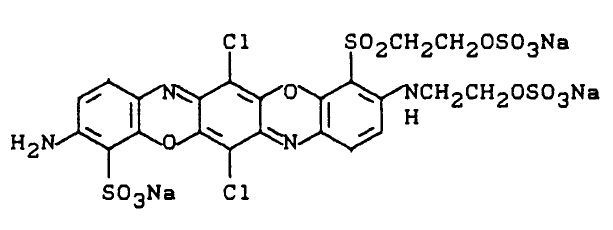

Es färbt auf Baumwolle ein kräftiges Blau.

## Patentansprüche

1. Verfahren zur Herstellung von Triphendioxazinverbindungen durch oxidative Cyclisierung von 2,5-Diarylaminobenzochinonen in gegebenenfalls Schwefeltrioxid enthaltender Schwefelsäure, dadurch gekennzeichnet, daß man als Oxidationsmittel Chlor, Brom, Natriumbromat oder Kaliumbromat verwendet.

2. Verfahren nach Anspruch 1, dadurch gekennzeichnet, daß man als Oxidationsmittel Chlor verwendet.

3. Verfahren nach Anspruch 1 bis 2, dadurch gekennzeichnet, daß man pro Mol 2,5-Diarylaminobenzochinon 0,5 bis 10 Mol, vorzugsweise 0,5 bis 3 Mol Oxidationsmittel einsetzt.

4. Verfahren nach Anspruch 1 bis 2, dadurch gekennzeichnet, daß man konzentrierte Schwefelsäure oder Oleum, das bis zu 50 Gew.-% Schwefeltrioxid enthält, einsetzt.

5. Verfahren nach Anspruch 1 bis 3, dadurch gekennzeichnet, daß man Monohydrat oder Oleum, das 5 bis 30 Gew.-% Schwefeltrioxid enthält, einsetzt.

6. Verfahren nach Anspruch 1 bis 4, dadurch gekennzeichnet, daß man die Cyclisierung bei 0 bis 60°C durchführt.

7. Verfahren nach Anspruch 1 bis 5, dadurch gekennzeichnet, daß man die Cyclisierung bei 10 bis 30°C durchführt.

8. Verfahren nach Anspruch 1 bis 6, dadurch gekennzeichnet, daß man 2,5-Diarylaminobenzochinone der Formel 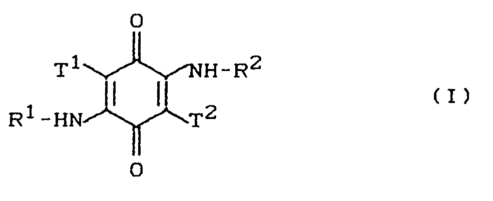 einsetzt, worin
T¹, T² = unabhängig voneinander H, Cl, Br, C₁-C₄-Alkoxy, C₁-C₄-Alkyl, gegebenenfalls substituierter Phenyl- oder Phenoxyrest,
R¹, R² = unabhängig voneinander einen gegebenenfalls substituierten Phenyl-, Naphthyl-, Carbazolyl-, Fluorenyl-, Chrysenyl- oder Pyrenylrest bedeuten.

9. Verfahren nach Anspruch 8, dadurch gekennzeichnet, daß man ein 2,5-Diarylaminobenzochinon der Formel (I) einsetzt, worin R¹ = R² = 4-β-Hydroxyethylamino-3-β-hydroxyethylsulfonylphenyl und T¹ = T² = H oder Cl ist.

## Claims

1. Process for preparing triphendioxazine compounds by oxidative cyclization of 2,5-diarylaminobenzoquinones in sulphuric acid optionally containing sulphur trioxide, characterized in that chlorine, bromine, sodium bromate or potassium bromate is used as oxidizing agent.

2. Process according to Claim 1, characterized in that chlorine is used as oxidizing agent.

3. Process according to Claim 1 to 2, characterized in that 0.5 to 10 moles, preferably 0.5 to 3 moles, of oxidizing agent are used per mole of 2,5-diarylaminobenzoquinone.

4. Process according to Claims 1 to 2, characterized in that concentrated sulphuric acid or oleum containing up to 50% by weight of sulphur trioxide is used.

5. Process according to Claims 1 to 3, characterized in that monohydrate or oleum containing 5 to 30% by weight of sulphur trioxide is used.

6. Process according to Claims 1 to 4, characterized in that the cyclization is carried out at 0 to 60°C.

7. Process according to Claims 1 to 5, characterized in that the cyclization is carried out at 10 to 30°C.

8. Process according to Claims 1 to 6, characterized in that the 2,5-diarylaminobenzoquinones used have the formula 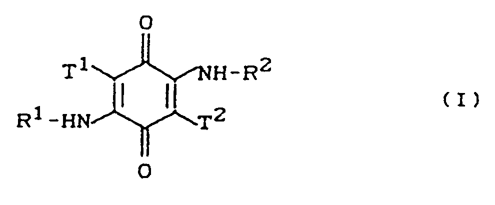 in which
T¹, T² are independently of each other H, Cl, Br, C₁-C₄-alkoxy, C₁-C₄-alkyl, an optionally substituted phenyl or phenoxy radical,
R¹, R² are independently of each other an optionally substituted phenyl, naphthyl, carbazolyl, fluorenyl, chrysenyl or pyrenyl radical.

9. Process according to Claim 8, characterized in that a 2,5-diarylaminobenzoquinone of the formula (I) is used in which R¹ = R² = 4-β=hydroxyethylamino-3-β-hydroxyethylsulphonylphenyl and T¹ = T² = H or Cl.

## Revendications

1. Procédé pour préparer des dérivés de triphénodioxazines par cyclisation oxydative de 2,5-diarylaminobenzoquinones dans de l'acide sulfurique contenant le cas échéant du trioxyde de soufre, caractérisé en ce que l'on utilise en tant qu'agent oxydant le chlore, le brome, le bromate de sodium ou le bromate de potassium.

2. Procédé selon la revendication 1, caractérisé en ce que l'on utilise le chlore en tant qu'agent oxydant.

3. Procédé selon les revendications 1 et 2, caractérisé en ce que l'on met en oeuvre de 0,5 à 10 mol, de préférence de 0,5 à 3 mol de l'agent oxydant par mole de la 2,5-diarylaminobenzoquinone.

4. Procédé selon les revendications 1 et 2, caractérisé en ce que l'on utilise de l'acide sulfurique concentré ou de l'oléum à une concentration en trioxyde de soufre allant jusqu'à 50 % en poids.

5. Procédé selon les revendications 1 à 3, caractérisé en ce que l'on utilise de l'acide sulfurique à 100 % ou de l'oléum contenant 5 à 30 % en poids de trioxyde de soufre.

6. Procédé selon les revendications 1 à 4, caractérisé en ce que l'on effectue la cyclisation à des températures de 0 à 60°C.

7. Procédé selon les revendications 1 à 5, caractérisé en ce que l'on effectue la cyclisation à des températures de 10 à 30°C.

8. Procédé selon les revendications 1 à 6, caractérisé en ce que l'on met en oeuvre des 2,5-diarylaminobenzoquinones de formule : 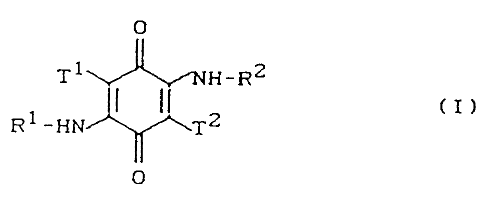 dans laquelle
T¹, T² représentent chacun, indépendamment l'un de l'autre, H, Cl, Br, un groupe alcoxy en C₁-C₄, alkyle en C₁-C₄, un groupe phényle ou phénoxy éventuellement substitué,
R¹, R² représentent chacun, indépendamment l'un de l'autre, un groupe phényle, naphtyle, carbazolyle, fluorényle, chrysényle ou pyrényle éventuellement substitué.

9. Procédé selon la revendication 8, caractérisé en ce que l'on met en oeuvre une 2,5-diarylaminobenzoquinone de formule I dans laquelle R¹ = R² = 4-β-hydroxyéthylamino-3-β-hydroxyéthylsulfonylphényle et T¹ = T² = H ou Cl.
